# EUROPÄISCHE PATENTSCHRIFT

(11) **EP 2 682 615 B1**
(45) Veröffentlichungstag und Bekanntmachung des Hinweises auf die Patenterteilung: **20.09.2017**
(21) Anmeldenummer: 12174826.3
(22) Anmeldetag: 03.07.2012
(51) Int. Cl.: F16B 37/00, F16B 41/00

(54) **Mutter**
Nut
Ecrou

(43) Veröffentlichungstag der Anmeldung: 08.01.2014
(73) Patentinhaber: NEDSCHROEF PLETTENBERG GmbH, 58840 Plettenberg (DE)
(72) Erfinder: Ulrikkeholm, Torben, 5550 Langeskov (DK); Nyqvist, Anders, 41314 Gothenburg (SE)
(74) Vertreter: Patentanwälte Dörner & Kötter PartG mbB

(56) Entgegenhaltungen:
- EP-A1- 0 128 077
- WO-A1-02/01085
- CH-A- 500 393
- DE-A1-102009 034 665
- DE-C1- 4 117 396
- DE-U1- 8 501 040
- FR-A- 721 163
- GB-A- 1 486 647
- GB-A- 2 435 499
- US-A- 1 237 400
- US-A- 1 611 210
- US-A- 2 320 031
- US-A- 2 326 681
- US-A- 2 502 642
- US-A- 4 248 285
- US-A- 5 178 500

## Beschreibung

Die Erfindung betrifft eine Mutter, insbesondere Schweiß-, Stanz- oder Nietmutter mit einem Kopfteil und einem an dem Kopfteil angeformten Schaftteil, wobei Kopfteil und Schaftteil von einer Durchgangsbohrung durchdrungen sind. Das Dokument DE 85 01 040 U zeigt die Merkmale des Oberbegriffs von Anspruch 1.

Muttern, insbesondere Schweißmuttern der vorgenannten Art werden beispielsweise im Fahrzeugbau eingesetzt, um Airbag-Kissen an Karosserieteilen zu befestigen. Dazu werden die Schweißmuttern, die regelmäßig mit einem Innengewinde versehen sind, an die Karosserieteile angeschweißt. Das aufblasbare Airbag-Kissen wird nachfolgend mittels Schrauben an mehreren Punkten der Karosserie fixiert. Beim Eindrehen der Schraube in die Schweißmutter entsteht ein Kraftschluss, wodurch das Airbag-Kissen sicher an der Karosserie gehalten ist. Die Montage des Airbag-Kissens erfolgt in mehreren Arbeitsgängen. Hierzu ist es erforderlich, die jeweilige Befestigungsschraube zunächst nur innerhalb der Mutter zu fixieren. Damit die Schraube vor der endgültigen Montage in nachfolgenden Arbeitsschritten nicht während des Transports herausfällt, muss die Schraube unverlierbar in der Mutter gehalten werden. Hierzu wird auf die Schraube ein Kunststoffelement aufgebracht, welches in die Mutter eingesteckt werden kann, wodurch über Kraft- oder Formschluss die Schraube innerhalb der Mutter gehalten ist.

Die Herstellung und Anbringung des Kunststoffelements auf die Schrauben gestaltet sich jedoch als sehr aufwendig. Weiterhin wird die Schraube durch das aufgebrachte Kunststoffelement verlängert, wodurch der Einbauraum erhöht ist.

Hier will die Erfindung Abhilfe schaffen. Der folgenden Erfindung liegt die Aufgabe zu Grunde, eine Schweißmutter zu schaffen, welche die vorgenannten Nachteile vermeidet und bei der eine unverlierbare Halterung einer Schraube ohne ein auf diese aufgebrachtes Kunststoffelement ermöglicht ist. Gemäß der Erfindung wird diese Aufgabe durch die Merkmale des Patentanspruchs 1 gelöst.

Mit der Erfindung ist eine Mutter geschaffen, welche die vorgenannten Nachteile vermeidet und durch die eine unverlierbare Fixierung einer Schraube ohne aufgebrachtes Kunststoffelement ermöglicht ist. Durch das in das Kopfteil integrierte Halteelement ist die Fixierung der Schraube ermöglicht, ohne dass diese endseitig mit einem Kunststoffelement zu versehen ist.

In weiterer Ausgestaltung der Erfindung ist der Haltering zumindest bereichsweise über eine Bördelkante in der Aufnahme gehalten. Hierdurch ist die Montage des Halterings in dem Kopfteil der Schweißmutter vereinfacht. Nach der Positionierung des Halterings in dem Kopfteil ist die Bördelkante lediglich durch mechanische Einwirkung umzubördeln. Alternativ kann eine solche Fixierung auch durch Einbringen von Kerben in den äußeren Rand der Aufnahme erzielt werden, wobei das dabei verdrängte Material eine partielle Verringerung des Durchmesser bewirkt, wodurch wiederum das Halteelement axial in dem Kopfteil gehalten ist.

In Weiterbildung der Erfindung ist die Durchgangsbohrung ohne Innengewinde ausgebildet. In diesem Fall kommt eine gewindefurchende Schraube zum Einsatz, welche beim Einschrauben ihr Gegengewinde selbst formt. Der Arbeitsgang des Gewindeschneidens entfällt, wodurch der Herstellungsaufwand der Mutter reduziert ist. Zudem wird durch Einbringen einer gewindefurchenden Schraube die Klemmwirkung erhöht. Da das eingeschnittene Gegengewinde toleranz- und formschlüssig geformt wird, erhält die Schraube eine Selbsthemmung. Das geformte Gewinde kann im Reparaturfall mit einer metrischen Schraube bestückt werden. Ein weiterer Effekt des Einsatzes einer gewindelosen Mutter ist, dass eine bessere Ausrichtung der Schraube erzielbar ist, wodurch das Risiko eines "cross threading" reduziert ist.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

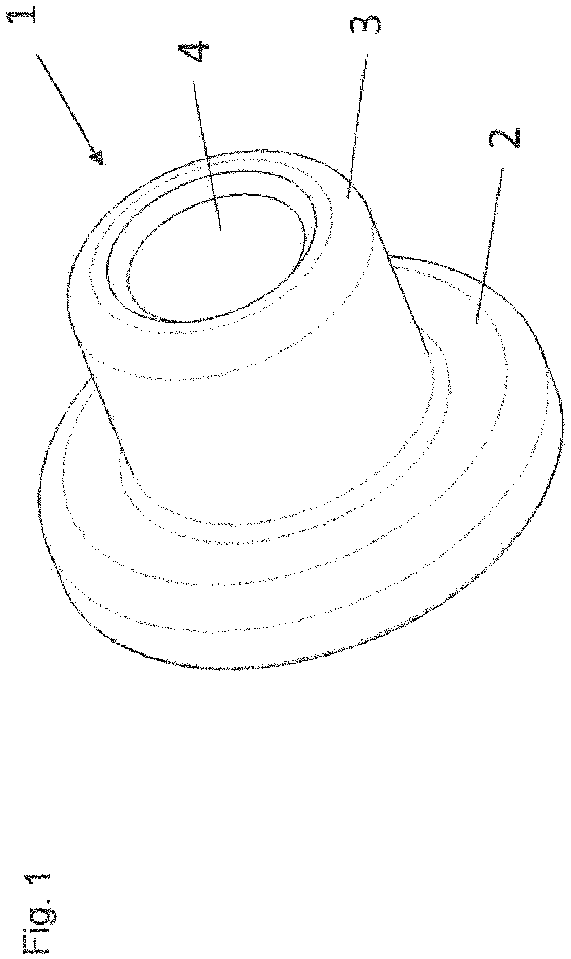

- Figur 1: die räumliche Darstellung einer Schweißmutter;

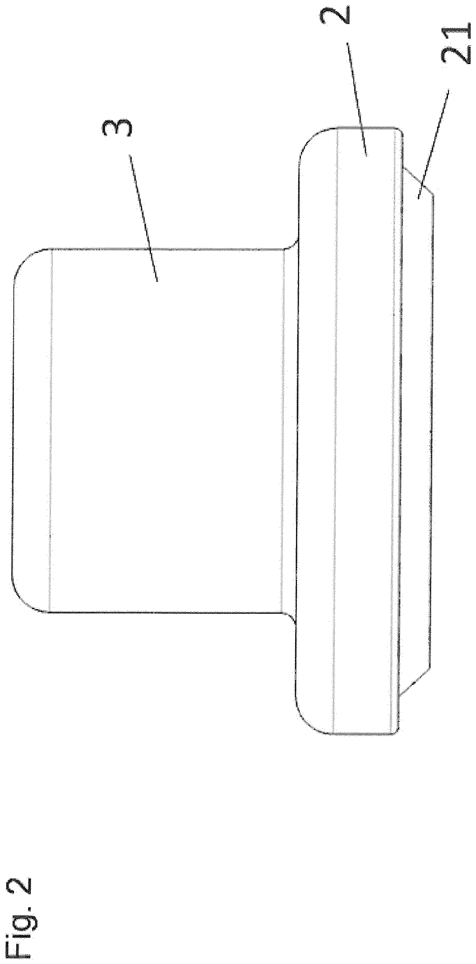

- Figur 2: die Schweißmutter aus Figur 1 in der Seitenansicht;

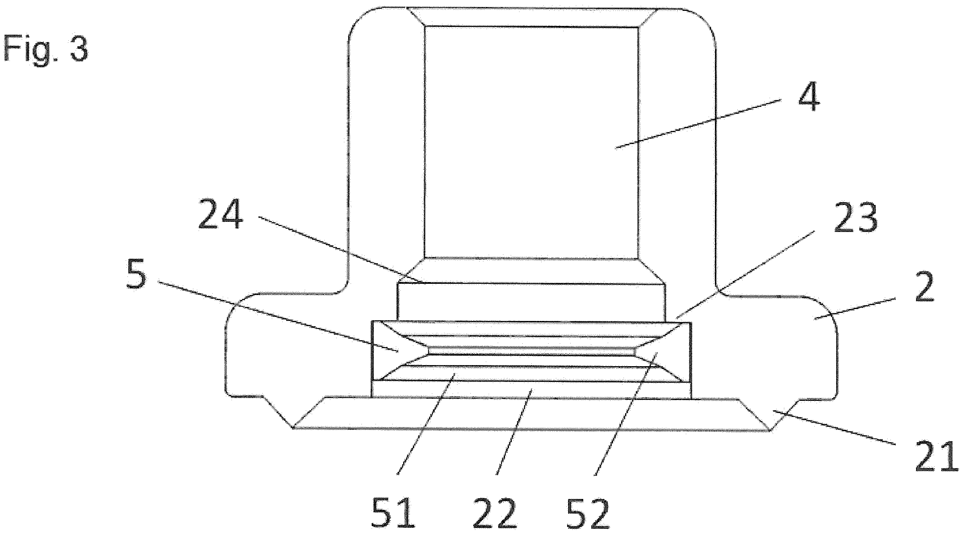

- Figur 3: die Darstellung der Schweißmutter aus Figur 1 im Längsschnitt;

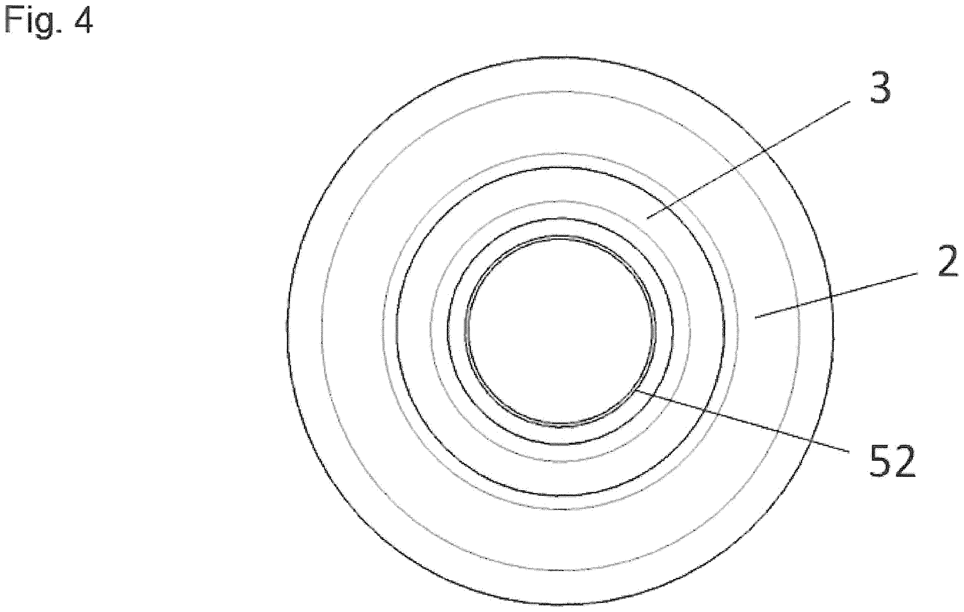

- Figur 4: die Schweißmutter aus Figur 1 in der Draufsicht;

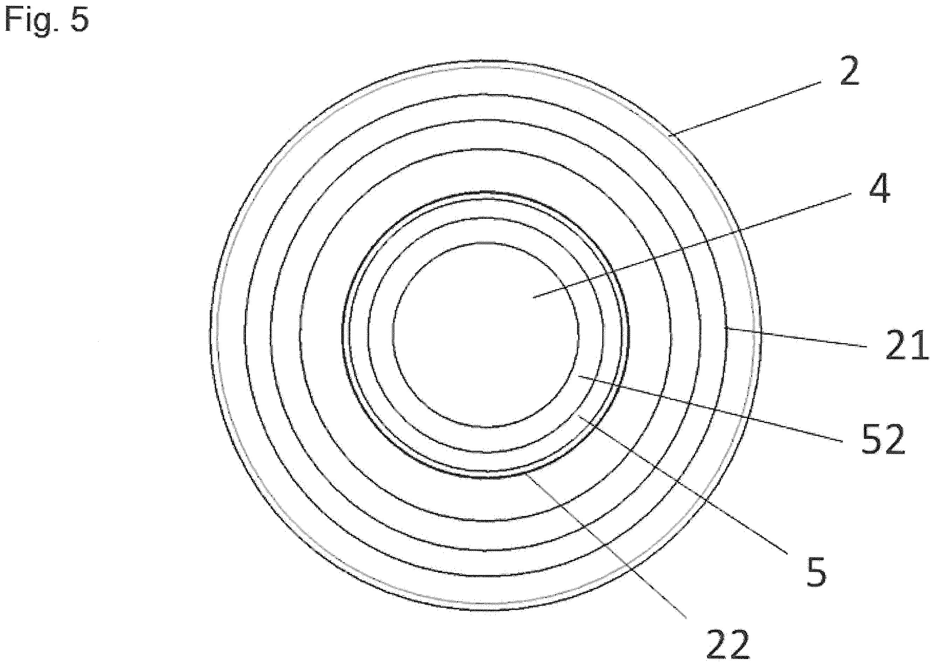

- Figur 5: die Schweißmutter aus Figur 1 in der Ansicht von unten und
- Figur 6: die schematische Darstellung einer Schweißmutter mit unverlierbar fixierter Schraube.

Die als Ausführungsbeispiel gewählte Mutter ist als Schweißmutter 1 ausgeführt und besteht im Wesentlichen aus einem Kopfteil 2 und einem an dem Kopfteil 2 angeformten Schaftteil 3, wobei Kopfteil 2 und Schaftteil 3 von einer Durchgangsbohrung 4 durchdrungen sind. In dem Kopfteil 2 ist ein Haltering 5 zur unverlierbaren Fixierung einer Schraube 6 eingebracht.

Das Kopfteil 2 ist im Wesentlichen hohlzylindrisch ausgebildet und an das ebenfalls im Wesentlichen hohlzylindrisch ausgebildete Schaftteil 3 angeformt, welches es umlaufend überragt. Selbstverständlich sind auch Ausgestaltungen einer Mutter möglich, bei der das Kopfteil 2 und das Schaftteil 3 eine identische Außenkontur aufweisen, welche sowohl kreisrund als auch polygonförmig ausgebildet sein kann.

An seiner dem Schaftteil 3 entgegengesetzten Unterseite ist auf dem Kopfteil 2 konzentrisch zur Durchgangsbohrung 4 ein kreisringförmiger Schweißfuß 21 mit dreieckförmigen Querschnitt angeformt. Der Schweißfuß 21 dient der Befestigung der Mutter an einem Karosserieblech mittels Schweißen. Weiterhin ist konzentrisch zur Durchgangsbohrung 4 in das Kopfteil 2 eine gegenüber der Durchgangsbohrung 4 durchmesservergrößerte Aufnahme 22 für den Haltering 5 eingebracht. Die Aufnahme 22 ist in Art einer Stufenbohrung ausgebildet, wodurch ein Anschlag 23 für den Haltering 5 gebildet ist. Die Aufnahme 22 geht über einen kegelförmigen Absatz 24 in die durchmesserreduzierte Durchgangsbohrung 4 über.

Der Haltering 5 ist im Ausführungsbeispiel aus Kunststoff hergestellt. Er besteht im Wesentlichen aus einem hohlzylinderförmigen Mantel 51, an dessen Innenwandung mittig umlaufend ein Steg 52 angeformt ist. Der Steg 52 weist einen sich zum Mittelpunkt des Halterings 5 verjüngenden, dreieckförmigen Querschnitt auf. Der Haltering 5 ist durch - nicht dargestellte - in die Außenkante 221 der Aufnahme 22 eingebrachte Einkerbungen, wodurch - nicht dargestellte - Materialvorsprünge gebildet sind, in der Aufnahme 22 axial gehalten.

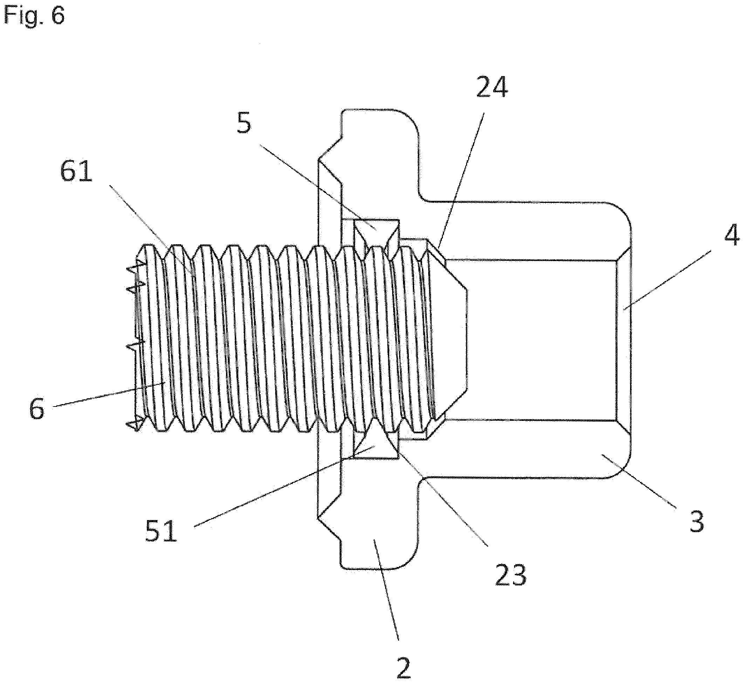

In Figur 6 ist eine erfindungsgemäße unverlierbare Fixierung einer Schraube in der Schweißmutter schematisch dargestellt. Der Gewindezapfen einer Schraube 6 wird mit seinem freien Ende durch den Haltering 5 gesteckt, wodurch der Steg 52 des Halterings 5 elastisch verformt wird und sich durch die elastischen Rückstellkräfte in den Gewindegang 61 der Schraube 6 hineinformt. Auf diese Weise ist die Schraube 6 in dem Haltering 5 in Art einer Steckverbindung gehalten, wobei sie an dem kegelförmigen Absatz 24 axial zentriert zur Durchgangsbohrung 4 anliegt. Nach endgültiger Positionierung eines Airbag-Kissens kann dieses durch Anziehen der bereits ausgerichteten Schraube befestigt werden. Im Ausführungsbeispiel ist die Durchgangsbohrung 4 gewindelos ausgeführt und es kommt eine gewindefurchende Schraube nach DIN ISO 7085 mit metrischem Gewinde zum Einsatz. Dabei wird im Zuge des Einschraubvorgangs der Schraube 6 das Gewinde in die Durchgangsbohrung 4 eingebracht.

## Patentansprüche

1. Schweißmutter, mit einem Kopfteil (2) und einem an dem Kopfteil (2) angeformten Schaftteil (3), wobei Kopfteil (2) und Schaftteil (3) von einer Durchgangsbohrung (4) durchdrungen sind, wobei die Durchgangsbohrung (4) im Bereich des Kopfteils (2) zumindest bereichsweise durchmesservergrößert ausgebildet ist, wodurch eine Aufnahme (22) gebildet ist, in die ein Halteelement zur unverlierbaren Fixierung eines Schraubenendes eingebracht ist, **dadurch gekennzeichnet, dass** das Halteelement durch einen Haltering (5) gebildet ist, der aus Kunststoff ausgebildet ist und aus einem hohlzylindrischen Mantel besteht, an dessen Innenwandung mittig umlaufend ein Steg (52) angeformt ist, der einen sich zum Mittelpunkt des Halterings (5) verjüngenden, dreieckförmigen Querschnitt aufweist, der das Einstecken einer Schraube (6) unter elastischer Verformung des Steges (52) des Halterings (5) ermöglicht, wobei der Steg (52) sich durch die elastischen Rückstellkräfte in den Gewindegang (61) der Schraube (6) hineinformt, wodurch die Schraube (6) wie eine Steckverbindung in die mit dem Haltering (5) versehene Schweißmutter in Einschraubposition gebracht werden kann, ohne dass bereits ein Einschraubvorgang erfolgt.

2. Mutter nach einem der vorgenannten Ansprüche, **dadurch gekennzeichnet, dass** der Haltering (5) zumindest bereichsweise über eine Bördelkante in der Aufnahme (22) gehalten ist.

3. Mutter nach einem der vorgenannten Ansprüche, **dadurch gekennzeichnet, dass** die Durchgangsbohrung (4) ohne Innengewinde ausgebildet ist.

## Claims

1. Weld nut having a head section (2) and a shaft section (3) formed on the head section (2), where a through bore (4) passes through the head section (2) and the shaft section (3), where the diameter of the through bore (4) is enlarged, at least in parts, in the area of the head section (2) thereby forming a seat (22) into which a retaining element for the captive attachment of a bolt end is inserted, **characterised in that** the retaining element is formed by a retaining ring (5) which is made of plastic and which consists of a hollow-cylindrical shell, around the centre of whose inner wall a web (52) is formed which has a triangular cross-section tapering towards the centre of the retaining ring (5) which allows a bolt (6) to be inserted by elastic deformation of the web (52) of the retaining ring (5), where the elastic restoring force of the web (52) causes it to enter and assume the shape of the thread groove (61) of the bolt (6), thereby locating the bolt, in the manner of a plug-in connection, in the correct position to be screwed into the weld nut fitted with the retaining ring (5) without any screwing action taking place.

2. Nut in accordance with the preceding claim, **characterised in that** the retaining ring (5) is held in the seat (22), at least in parts, by a beaded edge.

3. Nut in accordance with either of the preceding claims, **characterised in that** the through bore (4) is formed without an inner thread.

## Revendications

1. Écrou soudé comprenant une partie têtière (2) et une tige (3) moulée contre la partie têtière (2), sachant que la partie têtière (2) et la tige (3) sont traversées par un alésage (4), sachant que cet alésage traversant (4) est configuré au moins localement avec un diamètre accru dans la zone de la partie têtière (2), faisant qu'est formé un logement (22) dans lequel est introduit un élément de retenue servant à immobiliser une extrémité de vis sans risque de la perdre, **caractérisé en ce que** l'élément de retenue est formé par une bague de retenue (5) en matière plastique et se compose d'une enveloppe cylindrique creuse contre la paroi intérieure de laquelle est moulée une nervure (52) périphérique centrée, nervure qui présente une section triangulaire allant en s'amincissant en direction du milieu de la bague de retenue (5) et permettant d'enficher une vis (6) sous la déformation élastique de la nervure (52) de la bague de retenue (5), sachant que la nervure (52) vient épouser le pas de filetage (61) de la vis (6) en raison des forces de rappel élastiques, faisant que la vis (6) peut, comme une liaison enfichée, être amenée en position de vissage avec l'écrou soudé muni de la bague de retenue (5) sans qu'une opération de visage n'ait déjà lieu.

2. Écrou selon l'une des revendications précédentes, **caractérisé en ce que** la bague de retenue (5) est retenue au moins localement dans le logement (22) via une arête de bordage.

3. Écrou selon l'une des revendications précédentes, **caractérisé en ce que** l'alésage traversant (4) est configuré sans filetage intérieur.
